Europäisches Patentamt

European Patent Office

Office européen des brevets

(19)

(11) Veröffentlichungsnummer : **0 120 415**
**B1**

(12) EUROPÄISCHE PATENTSCHRIFT

(45) Veröffentlichungstag der Patentschrift :
11.10.89

(51) Int. Cl.⁴ : **A 01 B 59/043**

(21) Anmeldenummer : 84102844.2

(22) Anmeldetag : 15.03.84

(54) Schnellkuppler für Ackerschlepper.

(30) Priorität : 17.03.83 DE 3309588

(43) Veröffentlichungstag der Anmeldung :
03.10.84 Patentblatt 84/40

(45) Bekanntmachung des Hinweises auf die Patenterteilung : 11.10.89 Patentblatt 89/41

(84) Benannte Vertragsstaaten :
AT CH DE FR IT LI NL

(56) Entgegenhaltungen :
DE--A-- 1 457 678
DE--A-- 1 557 685
DE--A-- 1 557 856
DE--A-- 2 312 380
DE--B-- 1 251 069

(73) Patentinhaber : Rief, Roland
Goppertsweiler 22
D-7995 Neukirch (DE)

(72) Erfinder : Rief, Roland
Goppertsweiler 22
D-7995 Neukirch (DE)

(74) Vertreter : Patentanwälte Dipl.-Ing. E. Eisele Dr.-Ing.
H. Otten
Seestrasse 42
D-7980 Ravensburg (DE)

EP 0 120 415 B1

**Beschreibung**

Die Erfindung betrifft einen Schnellkuppler für mit nicht längenverschiebbaren Oberlenker versehene Ackerschlepper, insbesondere Dreipunkt-Schnellkuppler zur Aufnahme von landwirtschaftlichen Geräten, wie Kreiselheuer, Kreiselschwader oder dergleichen an Ackerschlepper, mit einem am Ackerschlepper angelenkten auf- und abwärts bewegbaren Dreipunktbock mit wenigstens einem Fanghaken zur Aufnahme von Kuppelbolzen der Zusatzgeräte.

Bei Ackerschleppern ist es bekannt, Zusatzaggregate wie Kreiselheuer, Kreiselschwader, Kreiselmäher, Heuwender oder dergleichen hinten oder auch vorn am Ackerschlepper anzuflanschen, wobei der Antrieb über eine vom Ackerschlepper aus angetriebene Antriebswelle (Gelenkwelle der Zapfwelle) erfolgt. Die Ankupplungseinrichtungen sind sogenannte Kraftheber, die mittels einer Dreipunkthydraulik die Zusatzaggregate aufnehmen und bewegen können.

Zur Erleichterung des Ankupplungsvorganges von Zusatzgeräten rüsten heute fast alle Traktorenhersteller ihre Traktoren serienmäßig mit Dreipunkt-Schnellkupplern aus. Auch ältere Schlepper werden aufgrund des erkannten Nutzwertes in großer Stückzahl nachträglich damit ausgerüstet.

Ein bekannter Schnellkuppler (DE-A-1 557 856) besteht aus einem Dreipunktbock, welcher über einen Oberlenker und zwei Unterlenker am Ackerschlepper befestigt wird. Geräteseitig ist ein nahezu deckungsgleiches Dreieck befestigt, wobei der Dreipunktbock am Ackerschlepper unter das Dreieck am Zusatzgerät fährt und dieses damit anhebt. Bei diesem bekannten Gerät wird der sonst übliche Teleskop-Oberlenker durch ein Hebelsystem ersetzt, welches die zunächst erforderliche Schrägstellung des schlepperseitigen Dreiecks ermöglicht, um dieses gegen ein Anschlagblech am geräteseitigen Dreieck zu fahren. Durch Heranfahren des Ackerschleppers wird dann das schlepperseitige Dreieck solange gegen das geräteseitige Dreieck gedrückt, bis beide wiederum völlig parallel zueinander stehen, damit das schlepperseitige Dreieck unterhalb das geräteseitige Dreieck mit U-förmigen Führungsblechen gelangen kann. Erst nach dieser sogenannten Frontalzentrierung, d. h. Parallelstellung der beiden Dreiecke, wird das Hebelsystem arretiert und der eigentliche Anhebevorgang durch die Hydraulik an den Unterlenkern zum Zusammenführen beider Dreiecke vorgenommen. Dieser Vorgang ist umständlich und zeitraubend, da der Ackerschlepper genauestens gegenüber dem Zusatzgerät positioniert werden muß und der eigentliche Ankupplungsvorgang in mehreren Schritten erfolgt. Ein in dieser Druckschrift dargestellter Verriegelungsmechanismus im oberen Bereich des schlepperseitigen Dreiecks dient lediglich dazu, die beiden ineinander bereits verkuppelten Dreiecke in ihrer Lage zu sichern.

Ein weiterer bekannter Schnellkuppler gemäß der DE-B-1 251 069 arbeitet als sogenannter Zweiphasen-Kuppler. Hier erfolgt zunächst eine Zentrierung der unteren Fangtaschen, bevor die beiden Unterlenker mit den geräteseitigen Bolzen einkuppeln können. Die Unterlenker werden mittels Sperriegel verriegelt. Als weiterer Schritt muß der Oberlenker mit dem geräteseitigen Anschluß zentriert und danach eingekuppelt werden. Dieser Ankupplungsvorgang kann nicht vom Schlepperführer erledigt werden, ohne daß er vom Schlepper absteigen muß.

Beide zuvor genannten Geräte haben den Nachteil, daß der Ankupplungsvorgang insbesondere bei unebenem Gelände nicht ohne weiteres bewerkstelligt werden kann, da der Schlepperfahrer durch Auf- und Absenken des Dreipunktbocks die Kuppelhaken in die richtige Position bringen muß, damit die Anschlußbolzen der Zusatzgeräte in die Kuppelhaken eingreifen und einrasten.

Der Erfindung liegt die Aufgabe zugrunde, einen Schnellkuppler der eingangs genannten Art derart zu verbessern, daß der Ankupplungsvorgang gegenüber herkömmlichen Geräten noch weiter verbessert wird und daß mittels einfachen und kostengünstigen Maßnahmen die Anwendungsmöglichkeiten von Dreipunkt-Schnellkupplern verbessert werden.

Diese Aufgabe wird erfindungsgemäß durch die Merkmale des Anspruchs 1 und insbesondere dadurch gelöst, daß am Dreipunktbock Anschlußmittel für den Oberlenker vorgesehen ist, daß die als V-förmiger Fanghaken oder Untergreifhaken gestaltete Ankupplungsmechanik mit einem Hakenförmigen Vorsprung für Untergreifen des oberen, geräteseitigen Anlenkpunkts bzw. Anschlußbolzens und für Hinabgleiten des Anlenkpunkts bzw. Anschlußbolzens auf der Flanke des Vorsprungs in der Endlage versehen ist und daß im unteren Bereich des Dreipunktbocks zwei als Fangtrichter gestaltete, trichterförmig geöffnete Kupplungsvorrichtungen zum Anschluß von unteren Anschlußbolzen des Zusatzgerätes vorgesehen sind.

Die erfindungsgemäße Einrichtung mit den kennzeichnenden Merkmalen des Hauptanspruchs hat gegenüber den bekannten Einrichtungen den Vorteil, daß der Ankupplungsvorgang nunmehr problemlos von statten geht. Der Traktorfahrer braucht beim Ankupplungsvorgang nur noch mit dem oberen Schnellkuppelhaken oder Fanghaken unter den oberen Kuppelbolzen des Zusatzgerätes zu fahren und diesen in den Fanghaken aufnehmen. Durch die trichterförmige Ausbildung der unteren beiden Aufnahmeeinrichtungen für die unteren Anschlußbolzen werden diese beim Anheben des Zusatzgerätes am oberen Kuppelbolzen automatisch in ihrer Lage zentriert. So kann auch eine beträchtliche Neigung des Zusatzgerätes gegenüber dem Ackerschlepper ohne weiteres ausgeglichen werden. Die trichterförmigen Aufnahmeeinrichtungen lassen die unteren Kuppelbolzen entlang von schrägen Führungswänden in die richtige Position gleiten (Fangtrichter), wobei die Arretierung in die richtige Position durch Anheben des Zusatzgerätes erfolgt. Ähnlich wie bei einer Anhängerkupplung eines Lastkraftwagens können bei der erfindungsgemäßen Einrichtung die unteren Kuppelbolzen des Zusatzgerätes in die richtige Position gleiten. Dabei sind die Wände der trichterförmigen Kupplungsvorrichtung oder Aufnahmeeinrichtung nach außen hin geneigt. Kostspielige und aufwendige Teleskop- oder hydraulische Oberlenker werden nicht benötigt, da die Einrichtung selbstzentrierend wirkt.

Durch die in den Unteransprüchen aufgeführten Maßnahmen ist eine weitere Verbesserung der erfindungsgemäßen Einrichtung möglich. Besonders vorteilhaft ist es, daß die trichterförmigen Kupplungsvorrichtungen oder Fangtrichter je eine untere und eine seitliche, äußere Führungswand oder Führungsbegrenzung aufweisen, die konisch auseinander laufen, wobei die seitlichen Führungswände sowohl im Vertikalschnitt, als auch im Horizontalschnitt (Draufsicht) geneigt ausgeführt sind. Diese zweckmäßige Ausführungsform der erfindungsgemäßen Einrichtung ist wie ein Viertel-Segment einer Lastwagen-Kupplung aufgebaut, wobei die seitliche Begrenzungswand gegenüber der unteren noch nach außen hin geneigt ausgeführt ist. Kern der Erfindung ist es deshalb, die Aufnahme der unteren Kuppelbolzen der Zusatzgeräte in den Dreipunktbock dadurch zu erleichtern, daß diese durch Selbstzentrierung der trichterförmigen Kupplungsvorrichtung in die richtige Lage kommen. Der Traktorfahrer braucht sich deshalb nur noch auf den oberen Kuppelbolzen zu konzentrieren und diesen mit dem Schnellkuppelhaken unterfahren und in den Fanghaken einzuhängen. Der Abstand des oberen Schnellkuppelhakens und der unteren Kupplungsvorrichtung muß aufeinander abgestimmt werden und den Abmaßen der Kuppelbolzen der Zusatzgeräte entsprechen. Hier verwendet man normalerweise die genormten Maße der Kraftheberkathegorien I, II und III.

Selbstverständlich ist auch die Anpassung der erfindungsgemäßen Einrichtung an Sonderkonstruktionen möglich. Bei einer apparativen Ausgestaltung der Zusatzeinrichtung z. B. gemäß dem Gegenstand der deutschen Patentanmeldung P 32 14 022.3, müssen dann die trichterförmigen Kupplungsvorrichtungen entsprechend höher gesetzt werden.

In zweckmäßiger Ausgestaltung der Erfindung gemäß Unteranspruch 3 sind Neigungswinkel der Führungswände der unteren Aufnahmeeinrichtungen des Dreipunktbocks angegeben, die aber auch andere Größenordnungen haben können. Maßgeblich ist, daß ein leichtes Eingleiten der Kuppelbolzen in die richtige Lage gewährleistet ist. Dieser Vorgang kann gemäß einer vorteilhaften Ausführungsform der Erfindung dadurch erleichtert werden, daß die Kuppelbolzen, insbesondere die unteren Kuppelbolzen des Zusatzgeräts als Gleitrollen oder dergleichen ausgebildet sind. Hierdurch wird das Eingleiten der Kuppelbolzen in die richtige Lage erleichtert.

Vorteilhaft ist weiterhin, daß die untere Führungswand der trichterförmigen Kupplungsvorrichtung in einem U-förmigen Fanghaken oder einer U-förmigen Arretierungsnut für den unteren Kuppelbolzen des Zusatzgerätes mündet, und daß der obere Fanghaken mit einem federbelasteten Sperriegel oder dergleichen versehen ist. Zweck dieser Einrichtungen und der Ausgestaltungen gemäß den Unteransprüchen 7 und 8 ist es, das Zusatzgerät einfach einzuhängen und nach erfolgtem Einhängen im Dreipunktbock in seiner Lage zu fixieren. Weiterhin müssen die Bolzen beim Abhängen des Zusatzgerätes leicht aus dem Schnellkuppelhaken herausgleiten können.

In Ausgestaltung der Erfindung nach Anspruch 9 werden Bodenunebenheiten ausgeglichen, was die Aufnahme des Zusatzgerätes weiter erleichtern kann. D. h., die Unterlenkerbefestigung des Dreipunktbocks ist in der Höhe verschiebbar. Hierdurch wird auch ein Ausgleich zum Anschluß des Dreipunktbocks an Ackerschlepper erzielt.

Ein zweckmäßiges und vorteilhaftes Ausführungsbeispiel der Erfindung ist in der Zeichnung dargestellt und in der nachfolgenden Beschreibung näher erläutert. Es zeigen

Fig. 1 eine Seitenansicht des erfindungsgemäßen Schnellkupplers,

Fig. 2 eine Ansicht des Schnellkupplers aus Sicht des Traktorfahrers.

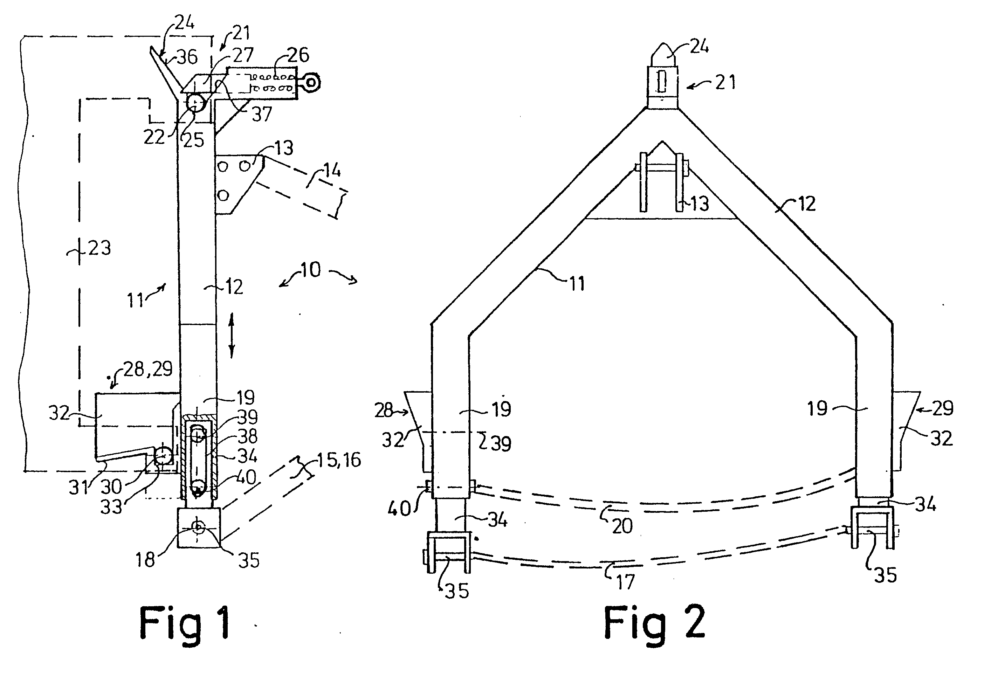

Der in Fig. 1 und 2 dargestellte erfindungsgemäße Schnellkuppler 10 ist in seinem Grundaufbau als an sich bekannter Dreipunktbock 11 ausgebildet. Die Einrichtung besteht aus einem dachförmigen Träger 12 in Form eines umgekehrten Buchstabens « V », der im oberen Bereich einen Anschlußflansch 13 für einen herkömmlichen mechanischen Oberlenker 14 eines nicht näher dargestellten Ackerschleppers aufweist. Die beiden Unterlenker 15, 16 des Ackerschleppers mit Unterlenkerbolzen 35 sind im unteren Bereich des Träger 12 angelenkt. Dies kann über eine Querachse 17 geschehen, die in Lager 18 des höhenverschiebbaren Vierkantrohrs 34 gelagert ist, zum Zwecke des Neigungsausgleich in vertikaler Richtung. Bei entsprechend stabiler Ausführung des Vierkantrohres 34 oder bei geringerer Belastung kann die Querachse 17 auch entfallen.

Die beiden Schenkel des dachförmigen Trägers 12 sind im unteren Bereich als parallele Träger 19 ausgebildet. Eine wahlweise angebrachte Versteifungsquerstrebe 20 dient der erhöhten Festigkeit des Schnellkupplers.

Der erfindungsgemäße Schnellkuppler weist im oberen Bereich des Dreipunktbocks einen nach oben hin geöffneten Schnellkuppelhaken 21 oder Fanghaken zum Anschluß des oberen Anschlußbolzens 22 des schematisch angedeuteten Zusatzgerätes 23 auf. Der Schnellkuppelhaken 21 ist V-förmig ausgebildet und besteht aus einem hakenförmigen Vorsprung 24, der unter den Kuppelbolzen 22 fährt und auf dessen Flanke 36 der Kuppelbolzen 22 in die Endlage — zylindrische Hakennut 25 — hinabgleitet. Ein mittels einer Feder 26 belasteter Sperriegel 27 arretiert den oberen Kuppelbolzen 22 in seiner Endlage. Die Gegenflanke 37 dient dem besseren Ausgleiten des Kuppelbolzens 22 beim Absetzen der Zusatzeinrichtung.

Im unteren Bereich des Dreipunktbocks 11 sind links und recht zwei trichterförmig geöffnete Kupplungsvorrichtungen 28, 29 zum Anschluß der unteren Anschlußbolzen 30 des Zusatzgerätes 23 vorgesehen. Diese Kupplungsvorrichtungen oder Aufnahmeeinrichtungen für die unteren Kuppelbolzen 30 bestehen aus je einer unteren 31 und einer seitlichen, äußeren Führungswand 32, die konisch auseinander laufen. Die Führungswände oder Führungsbegrenzungen 31, 32 dienen der Zentrierung bei der Aufnahme der unteren Kuppelbolzen 30 des Zusatzgerätes 23. Hierzu sind die Führungswände trichterförmig ausgebildet, wobei die seitliche Begrenzung 32 sowohl gegenüber einer Vertikalebene als auch einer Horizontalebene geneigt ausgebildet ist. Die Grundform der trichterförmigen Kupplungsvorrichtungen 28, 29 ist ähnlich aufgebaut, wie ein Viertelsegment einer Anhängevorrichtung für Lastkraftwagen, wobei die Seitenwände noch eine zusätzliche Neigung nach außen hin aufweisen können.

Die untere Führungswand 31 ist gegenüber einer Horizontalebene um ca. 10 bis 20° geneigt ausgeführt, die seitliche Führungswand 32 gegenüber einer Vertikalebene in Draufsicht sowie in Seitenansicht um ca. 20 bis 30°. Für die konische Aufweitung, d. h. die trichterförmige Ausgestaltung können jedoch auch noch andere Winkel verwendet werden.

Die untere Führungswand 31 der trichterförmigen Kupplungsvorrichtung 28, 29 mündet in einem U-förmigen Fanghaken 33 oder einer U-förmigen Arretierungsnut 33 zur Aufnahme und Arretierung der unteren Kuppelbolzen 30 des Zusatzgerätes 23 in ihre Endlage. Der Kuppelbolzen 30 rutscht demnach in die Arretierungsnut 33 ein, wodurch auch der obere Kuppelbolzen 22 in die Endlage in der zylindrischen Hakennut 25 zu liegen kommt.

In der Fig. 1 ist schematisch dargestellt, daß die Lage der Kupplungsvorrichtungen 28, 29 gegenüber der Darstellung in Fig. 1 nach unten hin versetzt sein kann (gestrichelte Linie).

Der Anschluß der Unterlenker 15, 16 mit Unterlenkerbolzen 35 kann durch ein in der Höhe verstellbares Vierkantrohr 34 erfolgen. Die Vierkantrohre 34 sind in die parallelen Träger 19 eingelassen und weisen Langlöcher 38 auf. Die Funktion des Neigungsausgleichs kann ausgeschaltet werden, wenn der obere Bolzen 39 das Vierkantrohr arretiert. Sofern der untere Bolzen 40 gesetzt ist, kann sich das Vierkantrohr entsprechend dem Langloch 38 in vertikaler Richtung bewegen. In Fig. 2 sind unterschiedliche Längen der Unterlenkerarretierung schematisch dargestellt.

## Patentansprüche

1. Schnellkuppler für mit nicht längenverschiebbaren Oberlenker (14) versehene Ackerschlepper, insbesondere Dreipunktschnellkuppler zur Aufnahme von landwirtschaftlichen Zusatzgeräten, wie Kreiselheuer, Kreiselschwader o. dgl. an Ackerschlepper, mit einem am Ackerschlepper mittels eines Oberlenkers (14) und zwei hydraulisch anhebbaren Unterlenkern (15, 16) angebrachten auf- und abwärtsbewegbaren Dreipunktbocks (11), der im oberen Dreieckpunkt eine V-förmig gestaltete, als Fanghaken (21) oder Untergreifhaken (21) ausgebildete Ankupplungsmechanik (21) zur Aufnahme eines oberen, geräteseitigen Anlenkpunktes (22) bzw. Anschlußbolzens (22) aufweist, dadurch gekennzeichnet, daß am Dreipunktbock (11) Anschlußmittel (13) für den Oberlenker vorgesehen ist, daß die als V-förmiger Fanghaken oder Untergreifhaken gestaltete Ankupplungsmechanik (21) mit einem hakenförmigen Vorsprung (24) für Untergreifen des oberen, geräteseitigen Anlenkpunkts (22) bzw. Anschlußbolzens (22) und für Hinabgleiten des Anlenkpunkts (22) bzw. Anschlußbolzens (22) auf der Flanke des Vorsprungs (24) in die Endlage versehen ist und daß im unteren Bereich des Dreipunktbocks (11) zwei als Fangtrichter gestaltete, trichterförmig geöffnete Kupplungsvorrichtungen (28, 29) zum Anschluß von unteren Anschlußbolzen (30) des Zusatzgerätes (23) vorgesehen sind.

2. Schnellkuppler nach Anspruch 1, dadurch gekennzeichnet, daß die trichterförmigen Kupplungsvorrichtungen (28, 29) je eine untere (31) und eine seitliche äußere (32) Führungswand oder Führungsbegrenzung aufweisen, die konisch auseinander laufen, wobei die seitlichen Führungswände (32) sowohl im Vertikalschnitt als auch im Horizontalschnitt (Draufsicht) geneigt ausgeführt sind.

3. Schnellkuppler nach Anspruch 1 oder 2, dadurch gekennzeichnet, daß die Neigung der unteren Führungswand (31) gegenüber einer Horizontalebene ca. 10 bis 20°, die Neigung der seitlichen Führungswand (32) gegenüber einer Vertikalebene in Draufsicht, sowie in Seitenansicht ca. 20 bis 30° beträgt.

4. Schnellkuppler nach einem oder mehreren der vorhergehenden Ansprüche, dadurch gekennzeichnet, daß die Kuppelbolzen (22, 30) des Zusatzgerätes (23) als Gleitrollen oder Gleitkugeln ausgebildet sind.

5. Schnellkuppler nach einem oder mehreren der vorhergehenden Ansprüche 1 bis 4, dadurch gekennzeichnet, daß die untere Führungswand (31) der trichterförmigen Kupplungsvorrichtung (28, 29) in einem U-förmigen Fanghaken (33) oder einer U-förmigen Arretierungsnut (33) für die unteren Kuppelbolzen (30) des Zusatzgerätes (23) mündet.

6. Schnellkuppler nach einem oder mehreren der vorhergehenden Ansprüche 1 bis 5, dadurch gekennzeichnet, daß der obere Fanghaken (21) insbesondere mit einem federbelasteten Sperriegel (26, 27) versehen ist.

7. Schnellkuppler nach einem oder mehreren der vorhergehenden Ansprüche 1 bis 6, dadurch gekennzeichnet, daß die dem hakenförmigen Vorsprung (24) des Schnellkuppelhakens (21) zugeordnete Flanke (36) zum Eingleiten des Bolzen (22), die gegenüberliegende Flanke (37) zum Ausgleiten des Bolzen (22) dient.

8. Schnellkuppler nach Anspruch 7, dadurch gekennzeichnet, daß der V-förmig ausgebildete Schnellkuppelhaken (21) im unteren Bereich (25) zylindrisch zur Aufnahme des Kuppelbolzens (22) ausgebildet ist.

9. Schnellkuppler nach einem oder mehreren der vorhergehenden Ansprüche, dadurch gekennzeichnet, daß der Anschluß für die Unterlenker (15, 16) einen arretierbaren Neigungsausgleich (34, 38, bis 40) aufweist, wobei die Unterlenkerbolzen (35) mit je einem, in der Höhe verschi?bberkantrohr (34) mit Langloch (38) verbunden sind, und wobei ein oberer Bolzen (39) den Neigungsausgleich arretiert und ein unterer Bolzen (40) den Neigungsausgleich freigibt.

**Claims**

1. Quick coupler for farm tractors, provided with longitudinally non-displaceable upper link (14), in particular a three-point quick coupler for receiving agricultural attachments, such as circular hay makers, circular swath makers or the like to farm tractors, with an upwardly and downwardly movable three-point jack (11), which is attached to the farm tractor by means of an upper link (14) and two hydraulically raisable lower links (15, 16) and has at the upper triangle point a V-shaped coupling mechanism (21), designed as catch hook (21) or underengaging hook (21), for receiving an upper articulation point (22) or connection bolt (22) on the attachment, characterized in that on the three-point jack (11) there are provided means of connection (13) for the upper link, in that the coupling mechanism (21) designed as V-shaped catch hook or underengaging hook is provided with a hook-shaped projection (24) for engaging underneath the upper articulation point (22) or connection bolt (22) on the attachment and for sliding-off of the articulation point (22) or connection bolt (22) on the flank of the projection (24) into the end position and in that, in the lower region of the three-point jack (11), there are provided two coupling devices (28, 29), designed as catching funnel and opened in the shape of a funnel, for the connection of lower connection bolts (30) of the attachment (23).

2. Quick coupler according to Claim 1, characterized in that the funnel-shaped coupling devices (28, 29) each have a lower (31) and a lateral outer (32) guide wall or guide limitation, which run conically apart, the lateral guide walls (32) being made inclined both in vertical section and in horizontal section (plan view).

3. Quick coupler according to Claim 1 or 2, characterized in that the inclination of the lower guide wall (31) is about 10 to 20° with respect to a vertical plane, the inclination of the lateral guide wall (32) is about 20 to 30° with respect to a vertical plane in plan view and in side view.

4. Quick coupler according to one or more of the preceding claims, characterized in that the coupling bolts (22, 30) of the attachment (23) are designed as slide rollers or slide balls.

5. Quick coupler according to one or more of the preceding claims 1 to 4, characterized in that the lower guide wall (31) of the funnel-shaped coupling device (28, 29) opens out in a U-shaped catch hook (33) or a U-shaped locking groove (33) for the lower coupling bolts (30) of the attachment (23).

6. Quick coupler according to one or more of the preceding claims 1 to 5, characterized in that the upper catch hook (21) is provided in particular with a springloaded blocking bolt (26, 27).

7. Quick coupler according to one or more of the preceding claims 1 to 6, characterized in that the flank (36) assigned to the hook-shaped projection (24) of the quick-coupling hook (21) serves for the sliding-in of the bolt (22), the opposite flank (37) serves for the sliding-out of the bolt (22).

8. Quick coupler according to Claim 7, characterized in that the V-shaped quick-coupling hook (21) is formed cylindrically in the lower region (25) for the receiving of the coupling bolt (22).

9. Quick coupler according to one or more of the preceding claims, characterized in that the connection for the lower links (15, 16) has a lockable inclination compensation (34, 38, to 40) the lower link bolts (35) being connected each to a vertically displaceable square tube (34) with slot (38), and an upper bolt (39) locking the inclination compensation and a lower bolt (40) releasing the inclination compensation.

**Revendications**

1. Attelage rapide pour tracteur agricole muni d'un bras supérieur (14) non déplaçable longitudinalement, en particulier un attelage rapide à trois points pour la réception d'accessoires agricoles, comme une faneuse, javeleuse ou analogue sur un tracteur agricole, comportant un support à trois points (11) déplaçable vers le haut et vers le bas, fixé au tracteur agricole au moyen d'un bras supérieur (14) et de deux bras inférieurs (15, 16) hydrauliquement levables, support qui présente, au point supérieur, un mécanisme d'attelage (21) en forme de V, réalisé sous forme de crochet d'attache (21) ou de crochet d'accrochage par en dessous (21), pour la réception d'un point d'articulation (22) ou d'un boulon d'assemblage (22) supérieur, du côté de l'accessoire, caractérisé en ce que, sur le support à trois points (11), est prévu un moyen de raccordement (13) pour le bras supérieur, en ce que le mécanisme d'attelage (21) réalisé sous forme de crochet d'attache ou de crochet d'accrochage par en dessous en forme de V est muni d'une saillie (24) en forme de crochet pour l'accrochage par en dessous du

5

point d'articulation (22) ou du boulon d'assemblage (22) supérieur, du côté de l'accessoire, et pour le glissement vers le bas du point d'articulation (22) ou du boulon d'assemblage (22) sur le flanc de la saillie (24) dans la position d'extrémité, et en ce que, dans la zone inférieure du support à trois points (11), sont prévus deux dispositifs d'attelage (28, 29) ouverts en entonnoir, réalisés sous forme d'entonnoirs de réception, pour le raccordement de boulons d'assemblage inférieurs (30) de l'accessoire (23).

2. Attelage rapide selon la revendication 1, caractérisé en ce que les dispositifs d'attelage (28, 29) en forme d'entonnoir présentent, chacun, une paroi ou délimitation de guidage inférieure (31) et une paroi latérale externe (32), qui divergent de façon conique, les parois de guidage latérales (32) étant réalisées de façon inclinée aussi bien en coupe verticale qu'en coupe horizontale (vue de dessus).

3. Attelage rapide selon la revendication 1 ou 2, caractérisé en ce que l'inclinaison de la paroi de guidage inférieure (31) par rapport à un plan horizontal s'élève à environ 10 à 20º, et l'inclinaison de la paroi de guidage latérale (32) par rapport à un plan vertical en vue de dessus, ainsi qu'en vue de côté, s'élève à environ 20 à 30º.

4. Attelage rapide selon une ou plusieurs des revendications précédentes, caractérisé en ce que les boulons d'assemblage (22, 30) de l'accessoire (23) sont réalisés sous forme de billes ou de rouleaux de glissement.

5. Attelage rapide selon une ou plusieurs des revendications précédentes 1 à 4, caractérisé en ce que la paroi de guidage inférieure (31) du dispositif d'attelage (28, 29) en forme d'entonnoir débouche dans un crochet d'attache (33) en forme de U ou une gorge d'arrêt (33) en forme de U pour les boulons d'assemblage inférieurs (30) de l'accessoire (23).

6. Attelage rapide selon une ou plusieurs des revendications précédentes 1 à 5, caractérisé en ce que le crochet d'attache supérieur (21) est muni en particulier d'un verrou d'arrêt (26, 27) chargé par ressort.

7. Attelage rapide selon une ou plusieurs des revendications précédentes 1 à 6, caractérisé en ce que le flanc (36) associé à la saillie en forme de crochet (24) du crochet d'attelage rapide (21) sert à l'accrochage du boulon (22), le flanc opposé (37) au décrochage du boulon (22).

8. Attelage rapide selon la revendication 7, caractérisé en ce que le crochet d'attelage rapide (21), réalisé sous forme de V, est cylindrique, dans la zone inférieure (25), pour la réception du boulon (22).

9. Attelage rapide selon une ou plusieurs des revendications précédentes, caractérisé en ce que le raccordement pour les bras inférieurs (15, 16) présente une compensation d'inclinaison (34, 38 à 40) arrêtable, les boulons (35) pour les bras inférieurs étant reliés, chacun, à un tube carré (34) à alésage longitudinal (38), déplaçable en hauteur, et un boulon supérieur (39) arrêtant la compensation d'inclinaison et un boulon inférieur (40) libérant la compensation d'inclinaison.

Fig 1

Fig 2